# EUROPEAN PATENT APPLICATION

(11) **EP 3 208 641 A1**
(43) Date of publication of application: **23.08.2017**
(21) Application number: 15850915.8
(22) Date of filing: 14.10.2015
(51) Int. Cl.: G02B 5/30, G02B 5/32, G02F 1/1335, G03H 1/02

(54) **POLARIZING PLATE, METHOD FOR MANUFACTURING SAME, AND MEDIUM**

(30) Priority: 15.10.2014 JP 2014210665
(71) Applicant: Soken Chemical & Engineering Co., Ltd., Toshima-ku Tokyo 171-8531 (JP)
(72) Inventor: SUTO, Yasuo, Sayama-shi Saitama 350-1320 (JP)
(74) Representative: Gulde & Partner
(86) International application number: PCT/JP2015/079067
(87) International publication number: WO 2016/060170

(57) **Abstract**

A polarizing plate is provided that is capable of transmitting a different polarization component for each region provided in the surface of the polarizing plate. According to the present invention, a polarizing plate is provided that includes: a transparent substrate; a transparent resin layer formed on the transparent substrate and having a concave-convex pattern; and a polarization layer formed on the transparent resin layer, wherein the transparent resin layer has a plurality of concave-convex regions with the concave-convex pattern extending in a different direction in each region, the directions in the concave-convex regions being different from each other.

## Description

### Technical Field

The present invention relates to a polarizing plate, a method of manufacturing the same, and a medium with a hologram function including the polarizing plate.

### Background Art

PTL 1 discloses a technique of manufacturing a wire grid polarizing plate by forming a very tight pitch concave-convex pattern in a resin coating on a resin substrate and depositing a metal film thereon.

### Citation List

### Patent Literature

PTL 1: Japanese Patent No. 4824068

### Summary of the Invention

### Technical Problem

In PTL 1, the concave-convex pattern is formed to extend in a fixed direction on the same plane. The polarization component transmitting the polarizing plate in PTL 1 thus turns out to be same across the entire surface of the polarizing plate. However, if a polarizing plate is capable of transmitting a different polarization component for each region provided in the surface of the polarizing plate, it is applicable to a wider range of use than before.

The present invention has been made in view of such circumstances and is to provide a polarizing plate capable of transmitting a different polarization component for each region provided in the surface of the polarizing plate.

### Solution to Problem

According to the present invention, a polarizing plate is provided that includes: a transparent substrate; a transparent resin layer formed on the transparent substrate and having a concave-convex pattern; and a polarization layer formed on the transparent resin layer, wherein the transparent resin layer has a plurality of concave-convex regions with the concave-convex pattern extending in a direction in each region, the directions in the concave-convex regions being different from each other.

Since the polarizing plate of the present invention has a plurality of concave-convex regions with the concave-convex pattern extending in a direction in each region, the directions in the concave-convex regions being different from each other, it is capable of transmitting a different polarization component for each region provided in the surface of the polarizing plate.

Various embodiments of the present invention are listed below as examples. The embodiments described below may be combined with each other.

The plurality of concave-convex regions are preferably provided in different positions in height from each other.

The concave-convex pattern is preferably a line and space arrangement.

The polarization layer is preferably made of conductive metal or metal oxide.

The transparent resin layer is preferably formed by curing a photocurable resin composition.

According to another aspect of the present invention, a medium with a hologram function is provided that includes the above polarizing plate.

According to still another aspect of the present invention, a method of manufacturing a polarizing plate is provided that includes: forming a transfer receiving resin layer by applying a photocurable resin composition on a transparent substrate; forming a transparent resin layer, by irradiating the transfer receiving resin layer with an active energy ray so as to cure the transfer receiving resin layer, in a state of pressing a mold against the transfer receiving resin layer, wherein the mold has a reverse pattern of a concave-convex pattern, wherein the concave-convex pattern is to be transferred to the transfer receiving resin layer; and forming a polarization layer of conductive metal or metal oxide on the transparent resin layer, wherein the mold has a plurality of reverse pattern regions with the reverse pattern extending in a direction in each region, the directions in the reverse pattern regions being different from each other.

The reverse pattern regions are preferably provided in different positions in height from each other.

The mold is preferably a mold made of resin.

### Brief Description of the Drawings

Fig. 1 is a perspective view of a polarizing plate 1 in an embodiment of the present invention.
Figs. 2A to 2C are drawings corresponding to a I-I cross section in Fig. 1 and illustrate a state where a polarization layer 9 is formed on a transparent resin layer 7.
Figs. 3A to 3C are cross sectional views corresponding to a II-II cross section in Fig. 1, illustrating a procedure of manufacturing the polarizing plate 1. Note that, for the convenience of illustration, shapes of a concave-convex pattern 5 and a reverse pattern 15 are schematically illustrated. Same applies to Figs. 4 to 7C.
Fig. 4 is a cross sectional view illustrating the procedure of manufacturing the polarizing plate 1, following Fig. 3C.
Figs. 5A to 5C are cross sectional views illustrating a procedure of manufacturing a mold 13 used for manufacture of the polarizing plate 1.
Figs. 6A to 6C are cross sectional views illustrating the procedure of manufacturing the mold 13 used for manufacture of the polarizing plate 1, following Fig. 5C.
Figs. 7A to 7C are cross sectional views illustrating the procedure of manufacturing the mold 13 used for manufacture of the polarizing plate 1, following Fig. 6C.
Figs. 8A and 8B are SEM images of a transfer product fabricated in Example, where 8A is a cross sectional view and 8B is a plan view.

### Description of Embodiments

Preferred embodiments of the present invention are specifically described below with reference to the drawings.

### 1. Polarizing plate

A polarizing plate 1 in an embodiment of the present invention includes a transparent substrate 3, a transparent resin layer 7 formed thereon and having a concave-convex pattern 5, and a polarization layer 9 formed on the transparent resin layer 7. The transparent resin layer 7 has a plurality of concave-convex regions 11a, 11b, and 11 c with the concave-convex pattern 5 extending in a different direction in each region.

### Transparent Substrate

The transparent substrate 3 is formed of a transparent material, such as a resin substrate and a quartz substrate. The material is preferably, but not particularly limited to, a resin substrate. Examples of a resin constituting the resin substrate include one selected from the group consisting of polyethylene terephthalate, polycarbonate, polyester, polyolefin, polyimide, polysulfone, polyether sulfone, cyclic polyolefin, and polyethylene naphthalate. The transparent substrate 3 is preferably in the form of a flexible film and preferably has a thickness ranging from 25 to 500 µm.

### Transparent Resin Layer, Concave-Convex Pattern, Concave-Convex Region

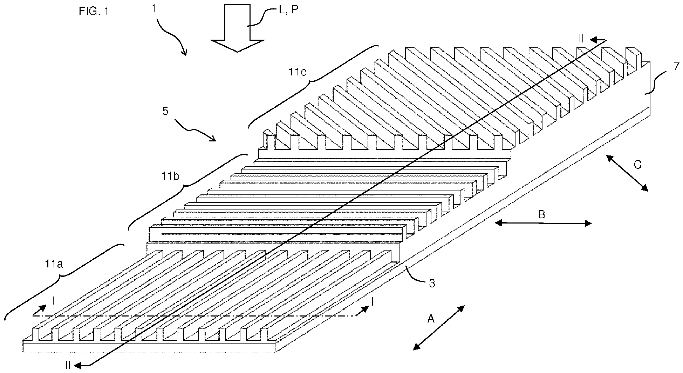

As illustrated in Fig. 1, the transparent resin layer 7 has the concave-convex pattern 5 formed thereon. The concave-convex pattern 5 is an elongated concave-convex pattern. The concave-convex pattern 5 extends in a different direction in each of the first to third concave-convex regions 11 a to 11 c. Specifically, the concave-convex pattern 5 in the first concave-convex region 11 a extends in an arrow A direction, the concave-convex pattern 5 in the second concave-convex region 11b extends in an arrow B direction, and the concave-convex pattern 5 in the third concave-convex region 11c extends in an arrow C direction. The arrow B direction is a direction orthogonal to the arrow A direction, and the arrow C direction is a direction 45 degrees displaced from the arrow A direction. The shape and the pitch of the concave-convex pattern 5 in the first to third concave-convex regions 11a to 11c may be same or different.

The concave-convex pattern 5 has a cycle, for example, from 10 nm to 1 µm, preferably from 30 to 500 nm, and more preferably from 50 to 200 nm. The concave-convex pattern 5 is preferably a line and space arrangement. The value of Space Width / Line Width is for example, but not particularly limited to, from 0.2 to 5, preferably from 0.5 to 4, and more preferably from 1 to 3. A too small value causes an increased line width and a too large value causes an increased space width. In either case, both polarization components vertical to and parallel with the line-and-space extending direction have the electric fields interacting with free electrons in the metal, which causes reflection and turns out not to function as a polarization layer.

Although the first to third concave-convex regions 11 a to 11 c may be formed in the same position in height, they are preferably formed as illustrated in Fig. 1 in different positions in height from each other. In this case, there is an advantage of clarifying boundaries between the concave-convex regions.

The transparent resin layer 7 may be formed by curing a photocurable resin composition. The details of the procedure are described later.

### Polarization Layer

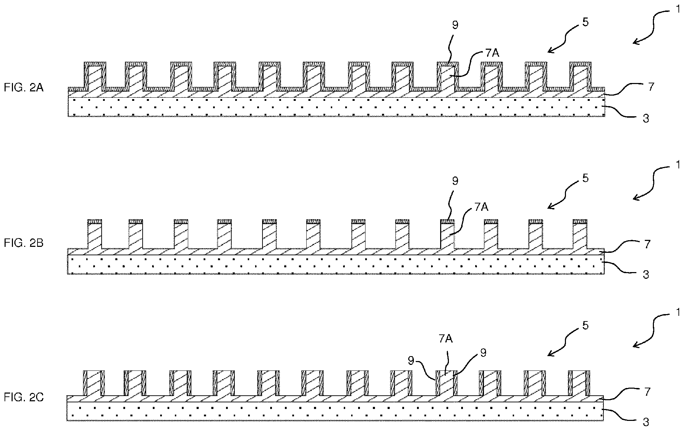

The polarization layer 9 is, as illustrated in Figs. 2A to 2C, formed on the transparent resin layer 7. The polarization layer 9 may be formed to have a function of polarizing incident light and is not limited in its material, thickness, shape, and the like. The polarization layer 9 may be formed of, for example, conductive metal (Ni, Al, etc.) or metal oxide (ITO, etc.). The polarization layer 9 may be formed along the shape of the concave-convex pattern 5 as illustrated in Fig. 2A, may be formed only on top of convex portions 7a of the concave-convex pattern 5 as illustrated in Fig. 2B, or may be formed only on sides of the convex portions 7a of the concave-convex pattern 5 as illustrated in Fig. 2C. That is, the polarization layer 9 may be formed in the form of, as illustrated in Fig. 2A, a film or in the form of, as illustrated in Figs. 2B to 2C, fine lines.

### Action and Use of Polarizing plate in Present Embodiment

The polarizing plate 1 is a wire grid polarizing plate and has a property of transmitting a polarization component with a plane of vibration (plane formed by an oscillating electric field) vertical to the direction in which the concave-convex pattern 5 extends. Accordingly, when unpolarized incident light L enters the polarizing plate 1, a polarization component with a plane of vibration vertical to the arrow A is transmitted in the first concave-convex region 11a, a polarization component with a plane of vibration vertical to the arrow B is transmitted in the second concave-convex region 11b, and a polarization component with a plane of vibration vertical to the arrow C is transmitted in the third concave-convex region 11c. When the unpolarized incident light L enters the polarizing plate 1, a plurality of (three, in the present embodiment) polarization components are allowed to be extracted at once.

When polarized light P with a plane of vibration vertical to the arrow A enters the polarizing plate 1, the polarized light P is almost entirely transmitted in the first concave-convex region 11 a, only partially (polarization component with a plane of vibration vertical to the arrow C) transmitted in the third concave-convex region 11 c, and almost entirely blocked in the second concave-convex region 11b. When the polarizing plate 1 is rotated 45 degrees without changing the direction of the plane of vibration of the polarized light P, the polarized light P is almost entirely transmitted in the third concave-convex region 11c and only partially transmitted in the first and second concave-convex regions 11a and 11b. When the polarizing plate 1 is further rotated 45 degrees without changing the direction of the plane of vibration of the polarized light P, the polarized light P is almost entirely transmitted in the second concave-convex region 11b, is only partially transmitted in the third concave-convex region 11c, and almost entirely blocked in the first concave-convex region 11a. According to the present embodiment, only by rotating the polarizing plate 1, the state of transmitting the polarized light P in each region is thus allowed to be changed.

The polarizing plate 1 in the present embodiment may be efficiently manufactured by nanoimprinting as described later. When the concave-convex pattern is formed to give a polarization function, another concave-convex pattern may be formed to give a function other than the polarization function (decorativity by a structural color, etc.) at the same time. In addition, formation of the concave-convex pattern to give a hologram function on the polarizing plate 1 in the present embodiment allows formation of a medium with the hologram function.

### 2. Method of Manufacturing Polarizing plate

Descriptions are given then to a method of manufacturing the polarizing plate 1. A method of manufacturing the polarizing plate 1 in the present embodiment includes a transfer receiving resin layer formation step, a transfer and curing step, and a polarization layer formation step.

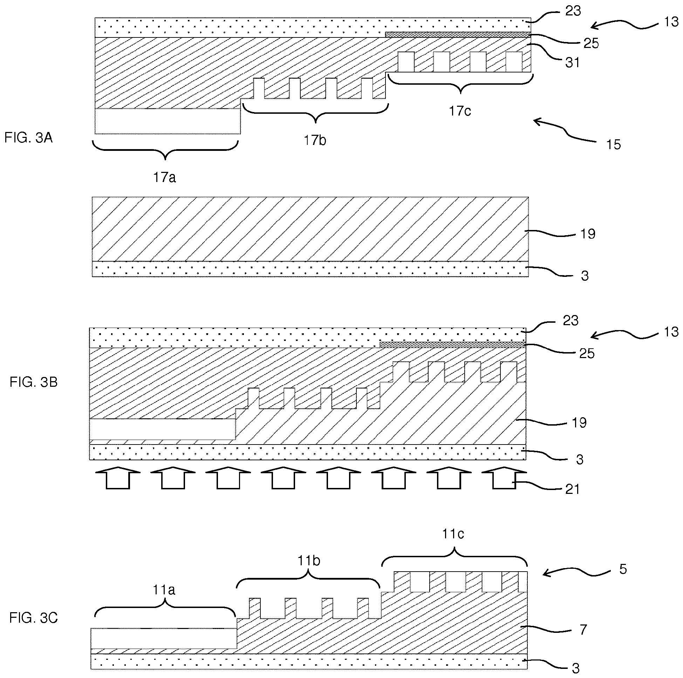

With reference to Figs. 3A to 4, each step is described below in detail.

### (1) Transfer Receiving Resin Layer Formation Step

First, as illustrated in Fig. 3A, a photocurable resin composition is applied on the transparent substrate 3 to form a transfer receiving resin layer 19.

The photocurable resin composition constituting the transfer receiving resin layer 19 contains a monomer and a photoinitiator and has a property of being cured by irradiation with an active energy ray. The "active energy ray" is a collective term for energy rays capable of curing a photocurable resin composition, such as UV light, visible light, and electron beam.

Examples of the monomer include photopolymerizable monomers to form a (meth)acrylic resin, a styrene resin, an olefin resin, a polycarbonate resin, a polyester resin, an epoxy resin, a silicone resin, and the like, and a photopolymerizable (meth)acrylic monomer is preferred. The (meth)acryl herein means methacryl and/or acryl, and (meth)acrylate means methacrylate and/or acrylate.

The photoinitiator is a component added to promote polymerization of the monomer and is preferably contained 0.1 parts by mass or more based on 100 parts by mass of the monomer. Although the upper limit of the content of the photoinitiator is not particularly defined, it is, for example, 20 parts by mass based on 100 parts by mass of the monomer.

The photocurable resin composition may contain components, such as a solvent, a polymerization inhibitor, a chain transfer agent, an antioxidant, a photosensitizer, a filler, and a leveling agent, without affecting the properties of the photocurable resin composition.

The photocurable resin composition may be produced by mixing the above components by a known method. The photocurable resin composition may be applied on the transparent substrate 3 in a method of spin coating, spray coating, bar coating, dip coating, die coating, slit coating, or the like to form the transfer receiving resin layer 19.

### (2) Transfer and Curing Step

Next, as illustrated in Figs. 3A to 3B, the transfer receiving resin layer 19 is irradiated with active energy rays 21 in a state of pressing a mold 13 against the transfer receiving resin layer 19. The mold has a reverse pattern 15 of the concave-convex pattern 5, and the concave-convex pattern 5 is to be transferred to the transfer receiving resin layer 19. The transfer receiving resin layer 19 is thus cured to form a transparent resin layer.

The mold 13 has the reverse pattern 15 in a resin layer 31 on a transparent substrate 23. The transparent substrate 23 is made of a resin substrate, a quartz substrate, a silicone substrate, or the like, and a resin substrate is preferred. The mold 13 is preferably a mold made of resin. The details of a method of manufacturing the mold 13 are described later.

Since the reverse pattern 15 has a reverse shape of the concave-convex pattern 5 illustrated in Fig. 1, it has a plurality of reverse pattern regions (first to third reverse pattern regions) 17a to 17c with the reverse pattern 15 extending in a different direction in each region corresponding to the first to third concave-convex regions 11a to 11c. The first to third reverse pattern regions 17a to 17c are provided in different positions in height from each other similar to the first to third concave-convex regions 11 a to 11 c. The mold 13 may be pressed against the transfer receiving resin layer 19 at a pressure capable of transferring the shape of the reverse pattern 15 to the transfer receiving resin layer 19.

The active energy rays 21 irradiated to the transfer receiving resin layer 19 may be irradiated in an integrated amount of light for sufficient curing of the transfer receiving resin layer 19. Such an integrated amount of light is, for example, from 100 to 10000 mJ/cm². Irradiation of the active energy rays 21 causes curing of the transfer receiving resin layer 19. In the present embodiment, the active energy rays 21 are irradiated from the transparent substrate 3 side because a light blocking pattern 25 is formed in the transparent substrate 23 of the mold 13. When a mold without a light blocking pattern in the region to form the concave-convex pattern 5 is used, the active energy rays 21 may be irradiated from the mold side.

Then, the mold 13 is removed and uncured photocurable resin composition is rinsed with a solvent to produce a structure in which, as illustrated in Fig. 3C, the transparent resin layer 7 with the concave-convex pattern 5 is formed on the transparent substrate 3.

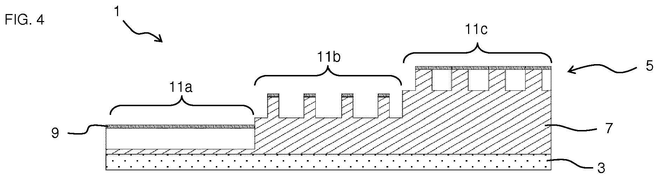

Then, as illustrated in Fig. 4, the polarization layer 9 is formed on the transparent resin layer 7 to complete the manufacture of the polarizing plate 1. The polarization layer 9 may be formed by, for example, deposition of conductive metal or metal oxide to be the material on the transparent resin layer 7 by sputtering.

### 3. Method of Manufacturing Mold

Descriptions are given to a method of manufacturing the mold 13, which is preferably used for manufacture of the polarizing plate 1 in the present embodiment. The mold 13 is formed by multiple repeating of formation of a transfer receiving resin layer and a pattern transfer and curing step. The formation of a transfer receiving resin layer and the pattern transfer and curing step are described in the same manner as the above descriptions on "Method of Manufacturing Polarizing plate", and some of the description are omitted as appropriate.

### First Layer

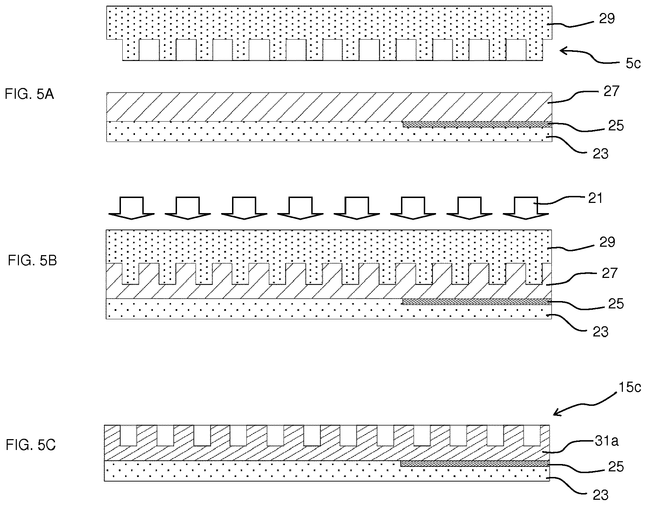

First, as illustrated in Fig. 5A, a photocurable resin composition is applied on the transparent substrate 23 with the light blocking pattern 25 formed thereon to form a transfer receiving resin layer 27.

Next, as illustrated in Figs. 5A to 5B, the transfer receiving resin layer 27 is cured by irradiating the transfer receiving resin layer 27 with the active energy rays 21 in a state of pressing a mold 29 with a concave-convex pattern 5c against the transfer receiving resin layer 27 to form, as illustrated in Fig. 5C, a transparent resin layer 31a with a reverse pattern 15c. The active energy rays 21 are irradiated from the mold 29 side to cure the entire surface of the transfer receiving resin layer 27.

The concave-convex pattern 5c has the same shape as that of the concave-convex pattern 5 formed in the third concave-convex region 11c. The reverse pattern 15c has the same shape as that of the reverse pattern 15 formed in the third reverse pattern region 17c.

### Second Layer

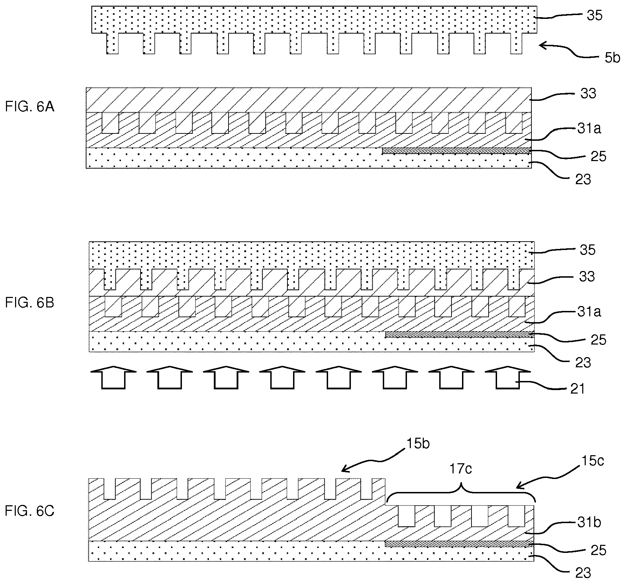

Then, as illustrated in Fig. 6A, a photocurable resin composition is applied on the transparent resin layer 31a to form a transfer receiving resin layer 33.

Then, as illustrated in Figs. 6A to 6B, the transfer receiving resin layer 33 is cured by irradiating the transfer receiving resin layer 33 with the active energy rays 21 in a state of pressing a mold 35 with a concave-convex pattern 5b against the transfer receiving resin layer 33 to form, as illustrated in Fig. 6C, a transparent resin layer 31b with reverse patterns 15b and 15c.

The concave-convex pattern 5b has the same shape as that of the concave-convex pattern 5 formed in the second concave-convex region 11b, and the reverse pattern 15b has the same shape as that of the reverse pattern 15 formed in the second reverse pattern region 17b.

The active energy rays 21 are irradiated to the transfer receiving resin layer 33 through the light blocking pattern 25 from the transparent substrate 23 side. The transfer receiving resin layer 33 is thus cured only in the regions not covered with the light blocking pattern 25. The light blocking pattern 25 has the same shape as that of the third reverse pattern region 17c. Accordingly, as illustrated in Fig. 6C, the reverse pattern 15c remains unchanged in the third reverse pattern region 17c, and in the other regions, a transparent resin layer 31b with the reverse pattern 15b formed thereon is formed in a higher position than the third reverse pattern region 17c.

Instead of using the transparent substrate 23 with the light blocking pattern 25, the active energy rays 21 may be irradiated through the light blocking pattern 25 in a state of overlapping another transparent substrate with the light blocking pattern 25 on the transparent substrate 23. In this case, the mold 13 without the light blocking pattern 25 may be formed.

### Third Layer

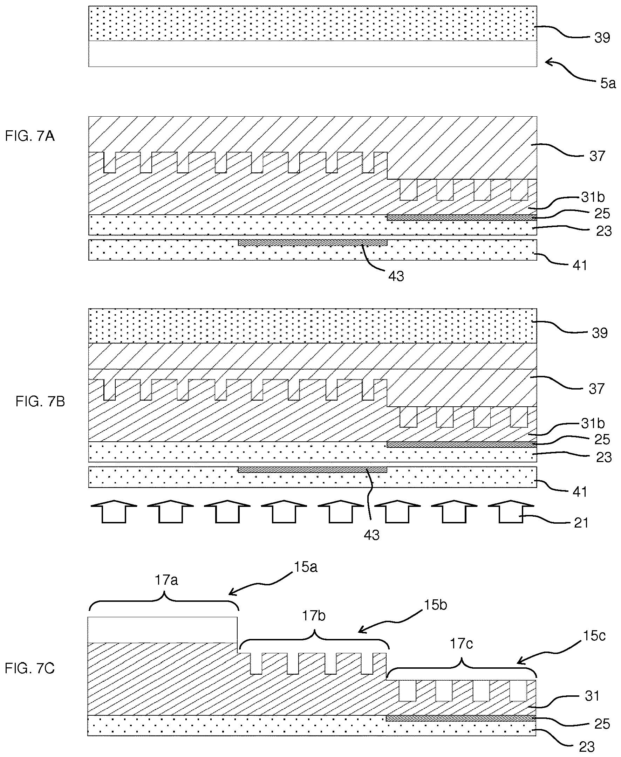

Then, as illustrated in Fig. 7A, a photocurable resin composition is applied on the transparent resin layer 31b to form a transfer receiving resin layer 37.

Then, as illustrated in Figs. 7A to 7B, the transfer receiving resin layer 37 is cured by irradiating the transfer receiving resin layer 37 with the active energy rays 21 in a state of pressing a mold 39 with a concave-convex pattern 5a against the transfer receiving resin layer 37 to form, as illustrated in Fig. 7C, the transparent resin layer 31 with reverse patterns 15a, 15b, and 15c.

The concave-convex pattern 5a has the same shape as that of the concave-convex pattern 5 formed in the first concave-convex region 11a, and the reverse pattern 15a has the same shape as that of the reverse pattern 15 formed in the first reverse pattern region 17a.

In a state of overlapping another transparent substrate 41 with a light blocking pattern 43 on the transparent substrate 23, the active energy rays 21 are irradiated to the transfer receiving resin layer 33 through the light blocking patterns 43, 25 from the transparent substrate 41 side. The transfer receiving resin layer 33 is thus cured only in the regions not covered with the light blocking patterns 43, 25. The light blocking pattern 43 has the same shape as that of the second reverse pattern region 17b. Accordingly, as illustrated in Fig. 7C, the reverse patterns 15b and 15c remain unchanged in the second and third reverse pattern regions 17b and 17c, and in the other regions, the transparent resin layer 31 with the reverse pattern 15a formed thereon is formed in a higher position than the second reverse pattern region 17b. The region where the reverse pattern 15a is formed is defined as the first reverse pattern region 17a.

By the above steps, the manufacture of the mold 13 is completed. The concave-convex shapes of the reverse patterns 15a to 15c may be same or different. When the reverse patterns 15a to 15c have the same concave-convex shape, one mold may be used as the molds 29, 35, and 39 by rotation.

In the above embodiment, the descriptions have been given to the method of manufacturing the mold 13 with the reverse pattern 15 of a three-stage structure. The number of stages in the reverse pattern 15 may be further increased by repeating, in the same manner as the third layer, the steps of forming a transfer receiving resin layer, transferring a desired reverse pattern, and curing only in a desired region.

### Example

### 1. Manufacture of Polarizing plate

The mold 13 was fabricated in the method described in "3. Method of Manufacturing Mold". In each of the first to third reverse pattern regions 17a to 17c, the reverse pattern 15 made of the same line and space arrangement was formed by the displacement of 45 degrees.

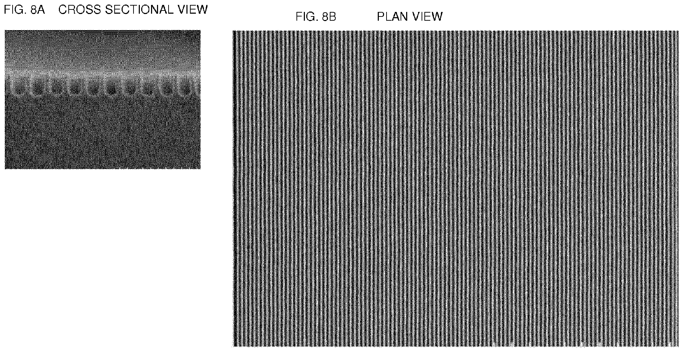

Using the mold 13 thus fabricated, a transfer product was fabricated by UV nanoimprinting in the method described in "2. Method of Manufacturing Polarizing plate". Figs. 8A and 8B illustrate SEM images of the transfer product thus produced. As illustrated in Figs. 8A and 8B, appropriate transfer of the line and space arrangement was confirmed. In the cross sectional view of Fig. 8A, the line and space arrangement was measured to be 117.0 nm in cycle, 33.5 nm in line width, and 142.9 nm in height of the arrangement.

Then, a nickel thin film (20nm) was formed on a pattern surface of the transfer product thus obtained using a sputtering system.

### 2. Observation of Function of Polarizing plate

As a polarized light source to emit linearly polarized light, a liquid crystal display was prepared. External images of in-plane rotation with and without the polarized light source were observed. The polarized light was irradiated from the backside (surface without the concave-convex pattern 5) of the polarizing plate 1. When the polarizing plate 1 was rotated in the plane, change in the appearance of the first to third concave-convex regions 11 a to 11 c was observed. This is considered because the transmission of the polarized light in each concave-convex region was changed in accordance with the change in the orientation of the wire grid pattern in each concave-convex region due to the rotation of the polarizing plate 1. From these results, a polarizing plate is considered to be successfully developed that was fabricated from a nanoimprinting mold with polarizers arranged in arbitrary position and orientation in the same plane and a transfer product thereof.

### Reference Signs List

- 1: Polarizing plate;
- 3, 23, 41: Transparent Substrate;
- 5: Concave-Convex Pattern;
- 7: Transparent Resin Layer;
- 9: Polarization Layer;
- 11a to 11c: First To Third Concave-Convex Regions;
- 13, 29, 35, 39: Mold;
- 15: Reverse Pattern;
- 17a to 17c: First To Third Reverse Pattern Regions;
- 19, 27, 33, 37: Transfer Receiving Resin Layer;
- 21: Active Energy Ray;
- 25, 43: Light Blocking Pattern;
- 31: Transparent Resin Layer

## Claims

1. A polarizing plate comprising:
a transparent substrate;
a transparent resin layer formed on the transparent substrate and having a concave-convex pattern; and
a polarization layer formed on the transparent resin layer, wherein
the transparent resin layer has a plurality of concave-convex regions with the concave-convex pattern extending in a direction in each region, the directions in the concave-convex regions being different from each other.

2. The polarizing plate of Claim 1, wherein the plurality of concave-convex regions are provided in different positions in height from each other.

3. The polarizing plate of Claim 1 or 2, wherein the concave-convex pattern is a line and space arrangement.

4. The polarizing plate of any one of Claims 1 to 3, wherein the polarization layer is made of conductive metal or metal oxide.

5. The polarizing plate of any one of Claims 1 to 4, wherein the transparent resin layer is formed by curing a photocurable resin composition.

6. A medium with a hologram function comprising the polarizing plate of any one of Claims 1 to 5.

7. A method of manufacturing a polarizing plate, comprising:
forming a transfer receiving resin layer by applying a photocurable resin composition on a transparent substrate;
forming a transparent resin layer, by irradiating the transfer receiving resin layer with an active energy ray so as to cure the transfer receiving resin layer, in a state of pressing a mold against the transfer receiving resin layer, wherein the mold has a reverse pattern of a concave-convex pattern, wherein the concave-convex pattern is to be transferred to the transfer receiving resin layer; and
forming a polarization layer of conductive metal or metal oxide on the transparent resin layer, wherein
the mold has a plurality of reverse pattern regions with the reverse pattern extending in a direction in each region, the directions in the reverse pattern regions being different from each other.

8. The method of Claim 7, wherein the plurality of reverse pattern regions are provided in different positions in height from each other.

9. The method of Claim 7 or 8, wherein the mold is made of resin.
